(19) Europäisches Patentamt
European Patent Office
Office européen des brevets

(11) Publication number: **0 169 947**
**B1**

(12) **EUROPEAN PATENT SPECIFICATION**

(45) Date of publication of patent specification: **19.04.89**

(51) Int. Cl.$^4$: **C 08 L 67/02,** C 08 L 67/04 // (C08L67/02, 67:04),(C08L67/04, 67:02)

(21) Application number: **84304616.0**

(22) Date of filing: **05.07.84**

(54) **Melt blend of non-thermotropic and thermotropic wholly aromatic polyesters.**

(43) Date of publication of application:
**05.02.86 Bulletin 86/06**

(45) Publication of the grant of the patent:
**19.04.89 Bulletin 89/16**

(84) Designated Contracting States:
**DE FR GB**

(56) References cited:
**EP-A-0 030 417**
**US-A-4 433 118**

(73) Proprietor: **CELANESE CORPORATION**
**1211 Avenue of the Americas**
**New York New York 10036 (US)**

(72) Inventor: **Kiss, Gabor D.**
**43 Morris Avenue**
**Summit New Jersey (US)**

(74) Representative: **De Minvielle-Devaux, Ian Benedict Peter et al**
**CARPMAELS & RANSFORD 43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 169 947 B1**

**Description**

The present invention relates to a melt blend of melt processable thermotropic and non-thermotropic wholly aromatic polyesters. The characteristics and properties of such a blend differ significantly from those expected in light of observations of the properties of ordinary mixtures and of many polymeric blends.

With some known exceptions, mixtures of polymeric materials are generally immiscible. That is, they consist of domains of chemically distinct phases. In general, one component forms a continuous phase, while the other component forms roughly spherical domains (aspect ratio less than 3) as inclusions. Under some circumstances, bi-continuous structures are also obtainable. Mixing two arbitrarily chosen polymers usually results in inferior materials having no utility, since in the absence of adhesion between phases, the dispersed phase merely weakens the continuous phase. Many useful blends are known, however, whose morphology and phase interaction are favorable.

Some polymeric materials, such as polyalkylene terephthalate and most wholly aromatic polyesters, exhibit an ordered structure in at least some regions of the polymer. This order can exist in one, two, or three dimensions.

GB—A—2,008,598 and US—A—4,228,218 disclose a polymer composition comprising 20 percent or less, based upon the total weight of polymeric material, of a first rigid polymeric material with the balance being a second polymeric material composed substantially of flexible molecular chains. The first polymeric material is dispersed in the second polymeric material in a microscopic region of 1 µm or less. Foreign counterparts of this application include JP—A—54065747, FR—A—2407956, and DE—A—2847782.

Blends of various thermotropic wholly aromatic polyesters are known as disclosed in commonly-assigned US—A—4,267,289. Blends of thermotropic wholly aromatic polyesters with polyarylene sulfide are known as disclosed in US—A—4,267,397.

It is an object of the present invention to provide a blend of thermotropic and non-thermotropic wholly aromatic polyesters which exhibits satisfactory mechanical properties, such as tensile strength, tensile modulus, flexural strength, flexural modulus, impact strength, and heat deflection temperature.

It is also an object of the present invention to provide a blend of thermotropic and non-thermotropic wholly aromatic polyesters which exhibits greater ease of processing due to the viscosity-reducing effect of the thermotropic component.

It is also an object of the present invention to provide a blend of thermotropic and non-thermotropic wholly aromatic polyesters which, by virtue of the inclusion of a relatively less expensive component, is less expensive than the relatively more expensive component alone and which exhibits no significant reduction in mechanical properties.

These and other objects as well as the scope, nature, and utilization of the present invention will be apparent from the following description and appended claims.

In accordance with the present invention, there is thus provided a polymer melt blend which is capable of exhibiting an anisotropic melt phase and possesses the ability to form shaped articles having satisfactory mechanical properties. The melt blend comprises:

(a) 20 to 75 percent by weight, based upon the total weight of components (a) and (b), of a melt processable wholly aromatic polyester which is not capable of forming an anisotropic melt phase apart from the blend;

(b) 25 to 80 percent by weight, based upon the total weight of components (a) and (b), of a melt processable wholly aromatic polyester which is capable of forming an anisotropic melt phase apart from the blend and which is present in the melt blend in the form of elongated domains of an aspect ratio of at least 3 and a volume of at least 1 $\mu m^3$.

In accordance with the present invention, there are also provided shaped articles comprised of the above-identified blend.

Figure 1 is a scanning electron micrograph of a fracture surface of a molded specimen comprised of the blend of the present invention at a magnification of 3500.

Figures 2 and 3 are scanning electron micrographs of fracture surfaces of molded specimens comprised of the blend of the present invention at a magnification of 5000.

Figure 4 is a scanning electron micrograph of a fracture surface of a molded specimen comprised of the blend of the present invention at a magnification of 1500.

Figure 5 is a scanning electron micrograph of a fracture surface of a molded specimen comprised of the blend of the present invention at a magnification of 2000.

The present invention provides a melt blend of melt processable, thermotropic (as defined) and non-thermotropic wholly aromatic polyesters. It has been surprisingly and unexpectedly found that the blends of the present invention exhibit unique self-reinforcing characteristics due to the inherent domain-forming properties of the thermotropic wholly aromatic polyesters employed. Such self-reinforcing characteristics enable the use of reinforcing fibers to be avoided during formation of the blend.

The first component of the melt blend of the present invention is a non-thermotropic wholly aromatic polyester. Such non-thermotropic wholly aromatic polyesters are not capable of forming an anisotropic melt phase apart. The non-thermotropic wholly aromatic polyesters are considered to be "wholly" aromatic in the sense that each moiety present in the polymer contributes at least one aromatic ring to the

polymer backbone. Such moieties may be derived from aromatic diols, aromatic diacids and aromatic hydroxy acids. Exemplary non-thermotropic wholly aromatic polyesters which can be employed in the present invention include but are not limited to copolymers of bisphenol A and isophthalic or terephthalic acid or mixtures thereof. Such copolymers are well-known in the art as evidenced by the disclosure of US—A—3,684,766 and 3,728,416. The bisphenol A will generally be present in such copolymers in an amount of about 50 mole percent, with the isophthalic or terephthalic acid component being present in an amount of about 50 mole percent. When mixtures of the isophthalic and terephthalic acid component are employed, they will generaly individually be present in an amount ranging from 25 to 75 mole percent, respectively, of the combined isophthalic and terephthalic acid component.

The second component of the melt blend is a thermotropic wholly aromatic polyester. Such polyesters are well-known to those skilled in the art. Thermotropic liquid crystal polymers are polymers which are liquid crystalline (i.e., anisotropic) in the melt phase. These polymers have been described by various terms, including "liquid crystalline", "liquid crystal", "mesomorphic" and "anisotropic". Briefly, the polymers of this class are thought to involve a parallel ordering of the molecular chains. The state wherein the molecules are so ordered is often referred to either as the liquid crystal state or the nematic phase of the liquid crystalline material. These polymers are prepared from monomers which are generally long, flat and fairly rigid along the long axis of the molecule and commonly have chain-extending linkages that are either coaxial or parallel.

Such polymers readily form liquid crystals (i.e., exhibit anisotropic properties) in the melt phase. Such properties may be confirmed by conventional polarized light techniques whereby crossed polarizers are utilized. More specifically, the anisotropic melt phase may be confirmed by the use of a Leitz polarizing microscope at a magnification of 40× with the sample on a Leitz hot stage and under nitrogen atmosphere. The polymer is optically anisotropic; i.e., it transmits light when examined between crossed polarizers. Polarized light is transmitted when the sample is optically anisotropic even in the static state.

As was the case with the first component, the thermotropic wholly aromatic polyesters employed in the present invention are considered to be "wholly" aromatic in the sense that each moiety present in the polymer contributes at least one aromatic ring to the polymer backbone and which enables the polymer to exhibit anisotropic properties in the melt phase. Such moieties may be derived from aromatic diols, aromatic diacids and aromatic hydroxy acids. Moieties which may be present in such thermotropic liquid crystal polymers suitable for use in the present invention include but are not limited to the following:

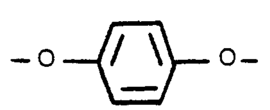 ; 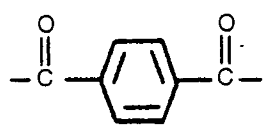 ; 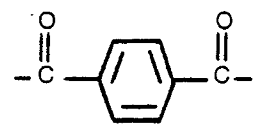 ;

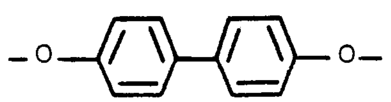 ; 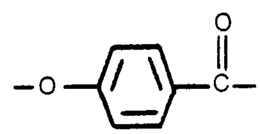 ;

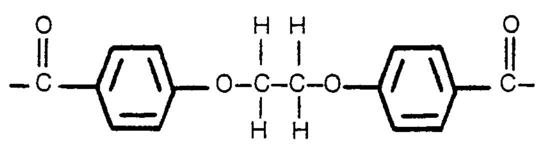 ; 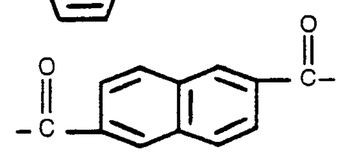 ;

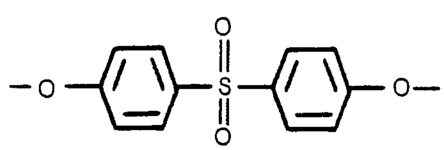 ; 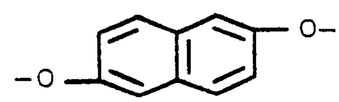 ;

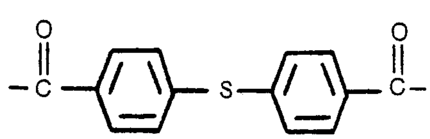 ; 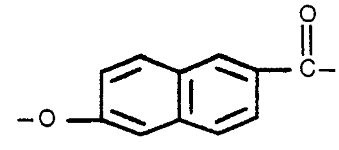 ;

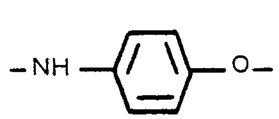 ; and 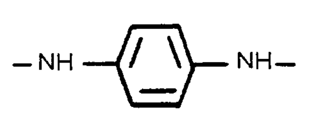 .

For the purposes of the present invention, the aromatic rings which are included in the polymer backbones of the polymer components may include substitution of at least some of the hydrogen atoms present upon an aromatic ring. Such substituents include alkyl groups of up to four carbon atoms; alkoxy

groups having up to four carbon atoms; halogens; and additional aromatic rings, such as phenyl and substituted phenyl. Preferred halogens include fluorine, chlorine and bromine.

Thermotropic liquid crystalline polymers which are suitable for use in the present invention must be capable of forming the requisite domains when present in the blend such that the polymer is present in the blend in the form of domains as defined in at least 50 percent of the polymer by volume. The presence of the domains may be verified by scanning electron micrographs of fracture surfaces of molded or extruded articles comprised of the blend or of residue left after removal of the non-thermotropic material by a suitable solvent.

Thermotropic wholly aromatic polyesters are well-known to those skilled in the art. Recent publications disclosing such polyesters include (a) BE—A—828,935 and 828,936, (b) NL—A—7505551, (c) DE—A—2,520,819, 2,520,820, and 2,722,120, (d) JP—A—43-223, 2132-116, 3017-692, and 3021-293, (e) US—A—3,991,013; 3,991,014; 4,057,597; 4,066,620; 4,075,262; 4,118,372; 4,146,702; 4,153,779; 4,156,070; 4,159,365; 4,169,933; 4,181,792; 4,188,476; 4,201,856; 4,226,970; 4,232,143; 4,232,144; 4,238,600; 4,245,082; and 4,247,514; and (f) GB—A—2,002,404.

Thermotropic wholly aromatic polyesters are also disclosed in commonly-assigned US—A—4,067,852; 4,083,829; 4,130,545; 4,161,470; 4,184,996; 4,219,461; 4,224,433; 4,238,598; 4,238,599; 4,256,624; 4,279,803; 4,299,756; 4,330,557 and 4,337,191. The wholly aromatic polyesters disclosed therein typically are capable of forming an anisotropic melt phase at a temperature below 400°C, and preferably below 350°C.

The thermotropic wholly aromatic polyesters which are suitable for use in the present invention may be formed by a variety of ester-forming techniques whereby organic monomer compounds possessing functional groups which, upon condensation, form the requisite recurring moieties are reacted. For instance, the functional groups of the organic monomer compounds may be carboxylic acid groups, hydroxyl groups, ester groups, acyloxy groups, acid halides, etc. The organic monomer compounds may be reacted in the absence of a heat exchange fluid via a melt acidolysis procedure. They, accordingly, may be heated initially to form a melt solution of the reactants with the reaction continuing as said polymer particles are suspended therein. A vacuum may be applied to facilitate removal of volatiles formed during the final stage of the condensation (e.g., acetic acid or water).

Commonly-assigned US—A—4,083,829, entitled "Melt Processable Thermotropic Wholly Aromatic Polyester", describes a slurry polymerization process which may be employed to form the wholly aromatic polyesters which are preferred for use in the present invention. According to such a process, the solid product is suspended in a heat exchange medium. The disclosure of this patent has previously been incorporated herein by reference in its entirety.

When employing either the melt acidolysis procedure or the slurry procedure of US—A—4,083,829, the organic monomer reactants from which the wholly aromatic polyesters are derived may be initially provided in a modified form whereby the usual hydroxy groups of such monomers are esterified (i.e., they are provided as lower acyl esters). The lower acyl groups preferably have from about two to about four carbon atoms. Preferably, the acetate esters of organic monomer reactants are provided.

Representative catalysts which optionally may be employed in either the melt acidolysis procedure or in the slurry procedure of US—A—4,083,829 include dialkyl tin oxide (e.g., dibutyl tin oxide), diaryl tin oxide, titanium dioxide, antimony trioxide, alkoxy titanium silicates, titanium alkoxides, alkali and alkaline earth metal salts of carboxylic acids (e.g., zinc acetate), the gaseous acid catalysts such as Lewis acids (e.g., $Bf_3$), hydrogen halides (e.g., HCl), etc. The quantity of catalyst utilized typically is about 0.001 to 1 percent by weight based upon the total monomer weight, and most commonly about 0.01 to 0.2 percent by weight.

The thermotropic wholly aromatic polyesters suitable for use in the present invention tend to be substantially insoluble in common solvents and accordingly are not susceptible to solution processing. As discussed previously, they can be readily processed by common melt processing techniques. Most suitable wholly aromatic polymers are soluble in pentafluorophenol to a limited degree.

The thermotropic wholly aromatic polyesters which are preferred for use in the recent invention commonly exhibit a weight average molecular weight of about 2,000 to 200,000, and preferably about 10,000 to 50,000, and most preferably about 20,000 to 25,000. Such molecular weight may be determined by gel permeation chromatography as well as by other standard techniques not involving the solutioning of the polymer, e.g., by end group determination via infrared spectroscopy on compression molded films. Alternatively, light scattering techniques in a pentafluorophenol solution may be employed to determine the molecular weight.

The wholly aromatic polyesters additionally commonly exhibit an inherent viscosity (i.e., I.V.) of at least 2.0 dl/g, e.g., 2.0 to 10.0 dl/g, when dissolved in a concentration of 0.1 percent by weight in pentafluorophenol at 60°C.

Especially preferred thermotropic wholly aromatic polyesters are those which are disclosed in above-noted US—A—4,161,470 and 4,330,457.

The wholly aromatic polyester which is disclosed in US—A—4,161,470 is a melt processable wholly aromatic polyester capable of forming an anisotropic melt phase at a temperature below 350°C. The polyester consists essentially of the recurring moieties I and II wherein:

I is

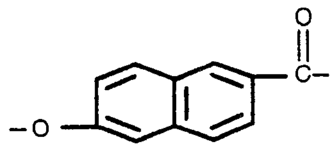

, and

II is

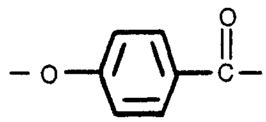

.

The polyester comprises 10 to 90 mole percent of moiety I, and 10 to 90 mole percent of moiety II.

In one embodiment, moiety II is present in a concentration of approximately 65 to 85 mole percent, and preferably in a concentration of approximately 70 to 80 mole percent, e.g., approximately 75 mole percent. In another embodiment, moiety II is present in a lesser proportion of approximately 15 to 35 mole percent, and preferably in a concentration of approximately 20 to 30 mole percent. In addition, at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, substituted phenyl, and mixtures thereof.

The polyester disclosed in US—A—4,330,457 is a melt processable wholly aromatic polyester-amide which is capable of forming an anisotropic melt phase at a temperature below approximately 400°C. The polyester-amide consists essentially of the recurring moieties I, II, III and optionally IV wherein:

I is

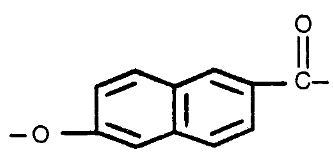

II is

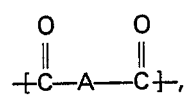

where A is a divalent radical comprising at least one aromatic ring or a divalent trans-1,4-cyclohexylene radical;

III is ⸺Y—Ar—Z⸺, where Ar is a divalent radical comprising at least one aromatic ring, Y is O, NH, or NR, and Z is NH or NR, where R is an alkyl group of 1 to 6 carbon atoms or an aryl group; and

IV is ⸺O—Ar'—O⸺, where Ar' is a divalent radical comprising at least one aromatic ring;

wherein at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, substituted phenyl and mixtures thereof, and wherein said polyester-amide comprises 10 to 90 mole percent of moiety I, 5 to 45 mole percent of moiety II, 5 to 45 mole percent of moiety III, and 0 to 40 mole percent of moiety IV.

The blend of the present invention comprises approximately 20 to approximately 75 percent by weight of the non-thermotropic wholly aromatic polyester component and approximately 25 to approximately 80 percent by weight of the thermotropic wholly aromatic polyester component. Preferably, the blend comprises approximately 30 to approximately 50 percent by weight of the thermotropic wholly aromatic polyester component. The above weight percentages are based upon the total weight of the two polymeric components in the blend, exclusive of additionally added components such as fillers, etc.

The blend comprised of the previously-identified wholly aromatic polyester components may also include in minor proportion various non-wholly aromatic polyester polymers (c). Such additional polymers will not be present in an amount greater than 50 percent by weight, based on the weight of the polymeric components, and preferably will be present in an amount less than 25 percent by weight.

In preparing the blend of the present invention, the individual components are commonly provided in the form of chips or pellets. Each of the components is weighed separately, and then the components are physically mixed together in any appropriate apparatus, e.g., a ball mill. The physical mixture is then dried at approximately 100°C overnight or for a period of time of approximately 24 hours. The mixture is conveniently dried in a vacuum oven or in a circulating air oven, although any suitable apparatus may be used. The purpose of the drying step is to remove water from the physical mixture so as to prevent degradation of the polymers during the blending operation. After the mixture of solid polymer particles has been dried, the polymer melt blend can then be prepared. A convenient method of forming the polymer melt blend is melt extrusion. The extrusion apparatus thoroughly mixes the polymers in the melt and then extrudes the blend in the form of a strand which, upon solidification, can be broken up into chips or pellets.

As previously discussed, it is known in the art that melt blends of two polymers tend to undergo phase separation, with a concomitant reduction in properties, due to the incompatibility of the polymers. However, unexpected and surprising results are achieved with the blend of the present invention. It has been observed that mechanical properties of the blend are significantly and usefully improved over that of the non-thermotropic wholly aromatic polyester matrix alone.

Such physical advantages have been found to exist as a result of the formation of domains of the liquid crystalline polymer component which provide reinforcement for the blend. Such domains are highly elongated in dimension and may, for example, be sheet-like or fiber-like in form. The domains have aspect ratios (i.e., the ratio of the length of the domain to the greatest thickness thereof) in excess of at least 3:1 and generally ranging from 10:1 to 100:1 or greater. For example, the aspect ratio of a sheet-like domain is the ratio of the length of the sheet to the thickness of the sheet. The length of typical domains can range from about 5 μm to 100 μm or infinitely long domains, with the volume thereof being at leat 1 $\mu m^3$.

The domains are oriented in the melt processing direction (i.e., the machine direction) of the blend and provide substantial reinforcement in the machine direction. Such domains offer advantages as a reinforcing material due to the fact that they can be significantly longer in dimension than would be reinforcing fibers which would conventionally separately be admixed with the blend prior to processing. The length of reinforcing fibers added to such blends is limited by the need to retain satisfactory melt processing characteristics and by breaking of the added fibers during the blending. Such considerations render the inclusion of lengthy reinforcing fibers objectionable.

By way of contrast, the liquid crystalline polymers employed in the blends of the claimed invention do not suffer from such disadvantages in that they can be processed according to conventional melt processing technique while inherently forming the self-reinforcing domains in the blend during melt processing. The disposition of the domains is not spacially regular, but the domains are often found to have their long axes oriented essentially parallel. Such parallel orientation enhances the reinforcing characteristics of the domains.

The blend of the present invention is capable of undergoing melt processing at a temperature within the range of approximately 240°C to 400°C. Preferably, the blend is capable of undergoing melt processing at a temperature within the range of approximately 275°C to 350°C.

The blend of the present invention demonstrates anisotropy in the melt phase. This is due to the fact that the thermotropic wholly aromatic polyester has been found to retain its anisotropic characteristics in spite of the presence of the other component. Thus, the liquid crystalline polymer components impart excellent processability characteristics to the blend.

The blend of the present invention is useful as a molding resin, and especially for injection molding. The blend can also be used in the formation of extruded articles and fibers and films. Articles molded from the blend of the present invention exhibit good mechanical properties, such as tensile strength, tensile modulus, flexural strength, flexural modulus, notched Izod impact strength, and heat deflection temperature.

Articles may also be molded from a molding compound which includes, as one component, the blend of the present invention. Such a molding compound incorporates into the blend of the present invention 1 to 50 percent and preferably 10 to 30 percent by weight, based upon the total weight of the molding compound, of a solid filler and/or reinforcing agent. Representative fibers which may serve as reinforcing media include glass fibers, asbestos, graphitic carbon fibers, amorphous carbon fibers, synthetic polymeric fibers, aluminium fibers, aluminium silicate fibers, aluminium oxide fibers, titanium fibers, magnesium fibers, rock wool fibers, steel fibers, tungsten fibers, cotton, wool, and wood cellulose fibers etc. Representative filler materials include calcium silicate, silica, clays, talc, mica, polytetrafluoroethylene, graphite, alumina trihydrate, sodium aluminium carbonate, barium ferrite.

In order to form an article by injection molding from the present blend, or from a molding compound made from the present blend, the blend or molding compound is brought to the melt temperature of the blend e.g., approximately 280°C to 300°C, and is then injected into a mold cavity. The mold cavity is commonly maintained at a temperature less than approximately 100°C, e.g. approximately 90°C to 100°C the blend in its melt phase is injected into the mold cavity at a pressure of approximately $6.9 \times 10^7 Nm^{-2}$. The cycle time (i.e., the time between injections) for the present blend commonly is about 10 to 40 seconds.

The properties of articles formed from blend compositions of the present invention can be improved by heat treatment to promote transesterification between the components. The articles may be thermally treated in an inert atmosphere (e.g., nitrogen, argon, helium) or alternatively a flowing oxygen-containing atmosphere (e.g., air).

It has been observed that the properties of articles formed from the blend of the present invention vary with the processing conditions, such as mold temperature, injection pressure, cycle time, etc. However, it would be obvious to one of ordinary skill in the art to experimentally determine those conditions which maximize the properties of articles formed from the present blend.

A review of the examplary data will indicate that the mechanical properties of the non-liquid crystalline wholly aromatic polyester are improved when present as the matrix polymer as a result of the presence of the liquid crystalline wholly aromatic polyester domains.

Example 1

A blend comprised of 70 weight percent of a polymer blend marketed by Union Carbide under the tradename Ardel AX-1500® comprised of a major amount of a non-thermotropic wholly aromatic polyester prepared from bisphenol A, isophthalic acid and terephthalic acid and a minor amount of nylon and 30 weight percent of a thermotropic liquid crystalline wholly aromatic polyester comprised of 40 mole percent of p-oxybenzoyl moieties and 60 mole percent of 6-oxy-2-naphthoyl moieties was formed by physically admixing pellets comprised of the two components and extrusion blending the same in a single screw extruder with the blend then being repelletized. Pellets of the blend were subsequently injection molded at a temperature of 300°C at a mold temperature of 66°C to form tensile bars and flexural bars. The mechanical properties of the bars were determined according to ASTM D638 with a testing area of 3.175 × 1.91 mm (tensile properties) and ASTM D790 (flexural properties) and listed below as Sample A. Tensile bars and flexural bars comprised solely of Ardel AX-1500® were also formed, with the mechanical properties thereof being set forth below as Sample B. A decrease in injection molding pressure of about 35 percent was observed for the Sample A blend as opposed to the Sample B blend.

TABLE I
Example 1 Results

| Sample | Tensile Strength $10^6 Nm^{-2}$ | Tensile Modulus $10^9 Nm^{-2}$ | Flexural Strength $10^6 Nm^{-2}$ | Flexural Modulus $10^9 Nm^{-2}$ |
|---|---|---|---|---|
| A | 102.01 | 4.275 | 100.67 | 3.32 |
| B (comp.) | 71.02 | 1.517 | 67.23 | 1.55 |

Fracture surfaces of the molded sample A were examined under a scanning electron microscope at a magnification of 3500 (Figure 1). Exemplary domains of the liquid crystalline polymer component depicted therein as (1) and (2) had average diameters of about 1 micron and visible lengths of at least about 10 microns. Specifically, domain (1) had a diameter of about 1 micron while domain (2) had a diameter of about 3 microns.

Example 2

A blend comprised of 70 weight percent of a non-thermotropic wholly aromatic polyester marketed by Union Carbide under the tradename Ardel D-100® prepared from bisphenol A, isophthalic acid and terephthalic acid and 30 weight percent of a thermotropic liquid crystalline wholly aromatic polyester prepared from 60 mole percent of 6-hydroxy-2-naphthoic acid, 20 mole percent of terephthalic acid and 20 mole percent of p-acetoxyacetanilide, was formed by physically admixing pellets comprised of the two components and extrusion blending the same in a single screw extruder with the blend then being repelletized.

Pellets of the blend were subsequently injection molded at a temperature of 350°C at a mold temperature of 100°C to form tensile bars and flexural bars. The mechanical properties of the bars were determined as in Example 1 and listed below as Sample A. Tensile bars and flexural bars comprised solely of the non-thermotropic wholly aromatic polyester Ardel D-100® were also formed, with the mechanical properties thereof being set forth below as Sample B. A decrease in injection molding pressure of about 35 percent was observed for the Sample A blend as opposed to the Sample B blend.

TABLE II
Example 2 Results

| Sample | Tensile Strength $10^6 Nm^{-2}$ | Tensile Modulus $10^9 Nm^{-2}$ | Flexural Strength $10^6 Nm^{-2}$ | Flexural Modulus $10^9 Nm^{-2}$ |
|---|---|---|---|---|
| A | 92.39 | 3.81 | 88.26 | 2.94 |
| B (comp.) | 62.06 | 1.96 | 86.19 | 2.26 |

Fracture surfaces of a molded Sample A were examined under a scanning electron microscope at a magnification of 5000 (Figure 2). Exemplary domains of the liquid crystalline polymer component depicted at (1)—(5) had average diameters of about 1 micron and visible lengths of at least about 10 microns. Figure

3 similarly depicts a fracture surface of a molded Sample A at a magnification of 5000 having domains of the liquid crystalline polymer component which are elongated, parallel, irregular in width and rather flat. The domain widths range from about 0.2 to 2.5 microns, averaging about 0.5 micron.

Example 3

A blend comprised of 70 weight percent of a non-thermotropic wholly aromatic polyester marketed by Union Carbide under the tradename Ardel AX-100® (previously identified) and 30 weight percent of a thermotropic liquid crystalline wholly aromatic polyester prepared from 60 mole percent of 6-hydroxy-2-naphthoic acid, 20 mole percent of terephthalic acid and 2 mole percent of p-acetoxyacetanilide was formed by physically admixing pellets comprised of the polymers and extrusion blending the same in a single screw extruder with the blend then being repelletized. Pellets of the blend were subsequently injection molded at a temperature of 350°C at a mold temperature of 100°C to form tensile bars.

Fracture surfaces of the molded specimens were examined under a scanning electron microscope at a magnification of 1500 (Figure 4) and 2000 (Figure 5). Exemplary domains of the liquid crystalline polymer component depicted as (1) and (2) in Figure 4 had average diameters of about 2 microns and lengths of at least about 10 microns. The domain depicted as (3) in Figure 5 had an average diameter of about 2 microns and a visible length of at least 30 microns.

**Claims**

1. A polymer melt blend which is capable of exhibiting an anisotropic melt phase and the ability to form shaped articles having satisfactory mechanical properties comprising:

(a) 20 to 75 percent by weight, based upon the total weight of components (a) and (b), of a melt processable wholly aromatic polyester which is not capable of forming an anisotropic melt phase apart from said blend;

(b) 25 to 80 percent by weight, based upon the total weight of components (A) and (b), of a melt processable wholly aromatic polyester which is capable of forming an anisotropic melt phase apart from said blend and which is present in the blend in at least 50% by volume in the form of elongated domains of an aspect ratio of at least 3 and a volume of at least 1 $\mu m^3$; and

(c) optionally up to 50% weight of a non-wholly aromatic polyester.

2. The polymer blend of Claim 1 which is capable of undergoing melt processing at a temperature within the range of 240°C to 400°C.

3. The polymer blend of Claim 1 which is capable of undergoing melt processing at a temperature within the range of 275°C to 350°C.

4. The polymer blend of Claim 1 wherein said component (a) is a copolymer of bisphenol A, isophthalic acid and terephthalic acid.

5. The polymer blend of Claim 1 wherein said component (a) is a copolymer of bisphenol A and terephthalic acid.

6. The polymer blend of Claim 1 wherein said component (b) apart from said blend is capable of forming an anisotropic melt phase at a temperature below 400°C.

7. The polymer blend of Claim 1 wherein said component (b) apart from said blend exhibits an inherent viscosity of at least 2.0 dl/g when dissolved in a concentration of 0.1 percent by weight in pentafluorophenol at 60°C.

8. The polymer blend of Claim 1 wherein said component (a) is present in an amount ranging from 70 to 50 percent by weight and said component (b) is present in an amount ranging from 30 to 50 percent by weight.

9. A molding compound comprising the polymer blend of Claim 1 which incorporates 1 to 50 percent by weight based upon the total weight of said molding compound, of a solid filler and/or reinforcing agent.

10. The molding compound of Claim 9 which incorporates 10 to 30 percent by weight, based upon the total weight of said molding compound, of a solid filler and/or reinforcing agent.

11. A molded article comprising the polymer blend of claim 1.

12. An extruded article comprising the polymer blend of claim 1.

13. A fiber which has been melt spun from the polymer blend of claim 1.

14. A film which has been melt extruded from the polymer blend of claim 1.

15. The polymer blend of claim 1 wherein said component (b) consists essentially of the recurring moieties I and II wherein:

I is

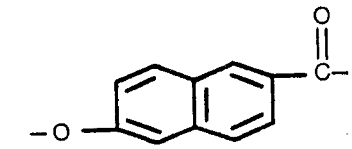

, and

II is

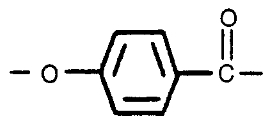

.

and wherein the polyester comprises 10 to 90 mole percent of moiety I, and 10 to 90 mole percent of moiety II, and wherein at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, substituted phenyl, and mixtures thereof.

16. The polymer blend of Claim 1 wherein said component (b) consists essentially of recurring moieties I, II, III and, optionally, IV wherein:

I is

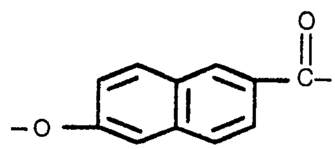

II is

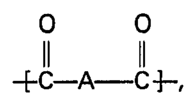

where A is a divalent radical comprising at least one aromatic ring or a divalent trans-1,4-cyclohexylene radical;

III is ‑[Y—Ar—Z]‑, where Ar is a divalent radical comprising at least one aromatic ring, Y is O, NH, or NR, and Z is NH or NR, where R is an alkyl group of 1 to 6 carbon atoms or an aryl group; and

IV is ‑[O—Ar′—O]‑, where Ar′ is a divalent radical comprising at least one aromatic ring;

wherein at least some of the hydrogen atoms present upon the rings optionally may be replaced by substitution selected from the group consisting of an alkyl group of 1 to 4 carbon atoms, an alkoxy group of 1 to 4 carbon atoms, halogen, phenyl, substituted phenyl and mixtures thereof, and wherein said polyester-amide comprises 10 to 90 mole percent of moiety I, 5 to 45 mole percent of moiety II, 5 to 45 mole percent of moiety III, and 0 to 40 mole percent of moiety IV.

**Patentansprüche**

1. Polymer-Schmelzmischung, die befähigt ist, eine anisotrope Schmelzphase und die Fähigkeit, geformte Gegenstände mit zufriedenstellenden mechanischen Eigenschaften zu bilden, aufzuweisen, umfassend

(a) 20 bis 75 Gew.-%, bezogen auf das Gesamtgewicht der Komponenten (a) und (b), eines in der Schmelze verarbeitbaren vollaraomatischen Polyesters, der nicht befähigt ist, außerhalb der genannten Schmelzmischung eine anisotrope Schmelzphase zu bilden;

(b) 25 bis 80 Gew.-%, bezogen auf das Gesamtgewicht der Komponenten (a) und (b), eines in der Schmelze verarbeitbaren vollaromatischen Polyesters, der befähigt ist, außerhalb der genannten Schmelzmischung eine anisotrope Schmelzphase zu bilden, und in der Mischung zu wenigstens 50 Vol.-% in Form länglicher Bezirke mit einem Schlankheitsverhältnis (Länge zu Breite) von wenigstens 3 und einem Volumen von wenigstens 1 $\mu m^3$ vorliegt; und

(c) gegebenenfalls bis zu 50 Gew.-% eines nicht vollaromatischen Polyesters.

2. Polymer-Mischung nach Anspruch 1, die sich bei einer Temperatur innerhalb des Bereichs von 240°C bis 400°C in der Schmelze verarbeiten läßt.

3. Polymer-Mischung nach Anspruch 1, die sich bei einer Temperatur innerhalb des Bereichs von 275°C bis 350°C in der Schmelze verarbeiten läßt.

4. Polymer-Mischung nach Anspruch 1, in der die Komponente (a) ein Copolymer aus Bisphenol A, Isophthalsäure und Terephthalsäure ist.

5. Polymer-Mischung nach Anspruch 1, in der die Komponente (a) ein Copolymer aus Bisphenol A und Terephthalsäure ist.

6. Polymer-Mischung nach Anspruch 1, in der die Komponente (b) befähigt ist, außerhalb der

genannten Schmelzmischung eine anisotrope Schmelzphase bei einer Temperatur unterhalb von 400°C zu bilden.

7. Polymer-Mischung nach Anspruch 1, in der die Komponente (b) außerhalb der genannten Schmelzmischung eine logarithmische Viskositätszahl von wenigstens 2,0 dl/g, gelöst in einer Konzentration von 0,1 Gew.-% in Pentafluorophenol bei 60°C, aufweist.

8. Polymer-Mischung nach Anspruch 1, in der die Komponente (a) in einer Menge im Bereich von 70 bis 50 Gew.-% vorliegt und die Komponente (b) in einer Menge im Bereich von 30 bis 50 Gew.-% vorliegt.

9. Formmasse, umfassend die Polymer-Mischung nach Anspruch 1, in die 1 bis 50 Gew.-% bezogen auf das Gesamtgewicht der Formmasse, eines festen Füllstoffs und/oder Verstärkungsmittels eingearbeitet sind.

10. Formmasse nach Anspruch 9, in die 10 bis 30 Gew.-%, bezogen auf das Gesamtgewicht der Formmasse, eines festen Füllstoffs und/oder Verstärkungsmittels einegearbeitet sind.

11. Geformter Gegenstand, umfassend die Polymer-Mischung nach Anspruch 1.

12. Extrudierter Gegenstand, umfassend die Polymer-Mischung nach Anspruch 1.

13. Faser, schmelzgesponnen aus der Polymer-Mischung nach Anspruch 1.

14. Folie, schmelzextrudiert aus der Polymer-Mischung nach Anspruch 1.

15. Polymer-Mischung nach Anspruch 1, in der die Komponente (b) im wesentlichen aus den wiederkehrenden Struktureinheiten I und II besteht, wobei

I is

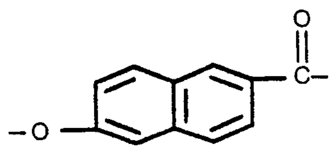

, and

II is

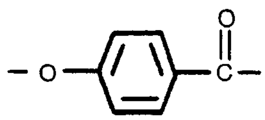

.

wobei der Polyester 10 bis 90 Mol-% der Struktureinheit I und 10 bis 90 Mol-% der Structureinheit II umfaßt und wenigstens einige der an den Ringen vorhandenen Wasserstoff-Atome gegebenenfalls durch Substituenten ersetzt sein können, die aus der aus einer Alkyl-Gruppe mit 1 bis 4 Kohlenstoff-Atomen, einer Alkoxy-Gruppe mit 1 bis 4 Kohlenstoff-Atomen, Halogen, Phenyl, substituiertem Phenyl und deren Mischungen bestehenden Gruppe ausgewählt sind.

16. Polymer-Mischung nach Anspruch 1, in der die Komponente (b) im wesentlichen aus den wiederkehrenden Struktureinheiten I, II, III und gegebenenfalls IV besteht, wobei

I is

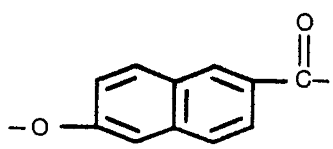

II

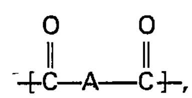

ist, worin A ein zweiwertiger Rest, der wenigstens einen aromatischen Ring umfaßt, oder ein zweiwertiger trans-1,4-Cyclohexylen-Rest ist;

III -[Y—Ar—Z]- ist, worin Ar ein zweiwertiger Rest ist, der wenigstens einen aromatischen Ring umfaßt, Y O, NH oder NR ist und Z NH oder NR ist, worin R eine Alkyl-Gruppe mit 1 bis 6 Kohlenstoff-Atomen oder eine Aryl-Gruppe ist;

IV -[O—Ar'—O]- ist, worin Ar' ein zweiwertiger Rest ist, der wenigstens einen aromatischen Ring umfaßt,

wobei wenigstens einige der an den Ringen vorhandenen Wasserstoff-Atome gegebenenfalls durch Substituenten ersetzt sein können, die aus der aus einer Alkyl-Gruppe mit 1 bis 4 Kohlenstoff-Atomen, einer Alkoxy-Gruppe mit 1 bis 4 Kohlenstoff-Atomen, Halogen, Phenyl, substituiertem Phenyl und deren Mischungen bestehenden Gruppe ausgewählt sind und das bezeichnete Polyesteramid 10 bis 90 Mol-% der Struktureinheit I, 5 bis 45 Mol-% der Struktureinheit II, 5 bis 45 Mol-% der Struktureinheit III und 0 bis 40 Mol-% der Struktureinheit IV umfaßt.

**Revendications**

1. Mélange de polymères à l'état fondu qui est capable de manifester une phase fondue anisotrope et la possibilité de former des articles façonnés ayant des propriétés mécaniques satisfaisantes comprenant:

(a) 20 à 75 pour cent en poids, sur la base du poids total des constituants (a) et (b), d'un polyester entièrement aromatique transformable à l'état fondu qui n'est pas capable de former une phase fondue anisotrope séparément dudit mélange;

(b) 25 à 80 pour cent en poids, sur la base du poids total des constituants (a) et (b), d'un polyester entièrement aromatique transformable à l'état fondu qui est capable de former une phase fondue anisotrope séparément dudit mélange et qui est présent dans le mélange à raison d'au moins 50 pour cent en volume sous forme de domaines allongés d'un rapport d'allongement d'au moins 3 et un volume d'au moins 1 $\mu m^3$; et

(c) éventuellement jusqu'à 50% en poids d'un polyester non entièrement aromatique.

2. Mélange de polymères de la revendication 1, qui est capable de subir une transformation à l'état fondu à une température dans le domaine de 240°C à 400°C.

3. Mélange de polymères de la revendication 1, qui est capable de subir une transformation à l'état fondu à une température dans le domaine de 275°C à 350°C.

4. Mélange de polymères de la revendication 1, dans lequel ledit constituant (a) est un copolymère de bisphénol A, d'acide isophtalique et d'acide téréphtalique.

5. Mélange de polymères de la revendication 1, dans lequel ledit constituant (a) est un copolymère de bisphénol A et d'acide téréphtalique.

6. Mélange de polymères de la revendication 1, dans lequel ledit constituant (b) séparé dudit mélange est capable de former une phase fondue anisotrope à une température inférieure à 400°C.

7. Mélange de polymères de la revendication 1, dans lequel ledit constituant (b) séparé dudit mélange manifeste une viscosité inhérente d'au moins 2 dl/g lorsqu'il est dissous à une concentration de 0,1 pour cent en poids dans le pentafluorophénol à 60°C.

8. Mélange de polymères de la revendication 1, dans lequel ledit constituant (a) est présent en une quantité variant de 70 à 50 pour cent en poids et ledit constituant (b) est présent en une quantité variant de 30 à 50 pour cent en poids.

9. Composé de moulage comprenant le mélange de polymères de la revendication 1, qui incorpore 1 à 50 pour cent en poids sur la base du poids total dudit composé de moulage d'une charge solide et/ou d'un agent de renforcement.

10. Composé de moulage de la revendication 9, qui incorpore 10 à 30 pour cent en poids, sur la base du poids total dudit composé de moulage, d'une charge solide et/ou d'un agent de renforcement.

11. Article moulé comprenant le mélange de polymères de la revendication 1.

12. Article extrudé comprenant le mélange de polymères de la revendication 1.

13. Fibre qui a été filée à l'état fondu à partir du mélange de polymères de la revendication 1.

14. Film qui a été extrudé à l'état fondu à partir du mélange de polymères de la revendication 1.

15. Mélange de polymères de la revendication 1, dans lequel ledit constituant (b) consiste essentiellement en les fractions récurrentes I et II dans lesquelles:

I is 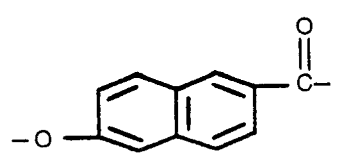 , and

II is 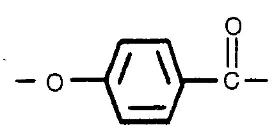 .

dans lequel le polyester comprend 10 à 90 pour cent molaire de la fraction I, et 10 à 90 pour cent molaire de la fraction II, et dans lequel au moins certains des atomes d'hydrogène présents sur les noyaux peuvent être éventuellement remplacés par des substituants choisis dans le groupe consistant en un groupe alkyle de 1 à 4 atomes de carbone, un groupe alcoxy de 1 à 4 atomes de carbone, un halogène, un phényle, un phényle substitué et leurs mélanges.

16. Mélange de polymères de la revendication 1, dans lequel ledit constituant (b) consiste essentiellement en unités récurrentes I, II, III et éventuellement IV, dans lesquelles:

I is

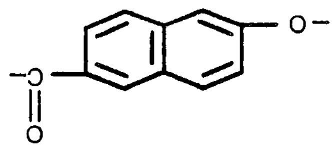

II est

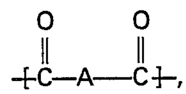

dans laquelle A est un radical divalent comprenant au moins un noyau aromatique ou un radical divalent trans-1,4-cyclohexylène;

III est -[Y—Ar—Z]-, dans laquelle Ar est un radical divalent comprenant au moins un noyau aromatique, Y est O, NH ou NR, et Z est NH ou NR, R étant un groupe alkyle de 1 à 6 atomes de carbone ou un groupe aryle; et

IV est -[O—Ar'—O]-, dans laquelle Ar' est un radical divalent comprenant au moins un noyau aromatique;

dans lequel au moins certains des atomes d'hydrogène présents sur les noyaux peuvent être éventuellement remplacés par des substituants choisis dans le groupe consistant en un groupe alkyle de 1 à 4 atomes de carbone, un groupe alcoxy de 1 à 4 atomes de carbone, un halogène, un phényle, un phényle substitué et leurs mélanges, et dans lequel ledit polyester-amide comprend 10 à 90 pour cent molaire d'unité I, 5 à 45 pour cent molaire d'unité II, 5 à 45 pour cent molaire d'unité III, et 0 à 40 pour cent molaire d'unité IV.

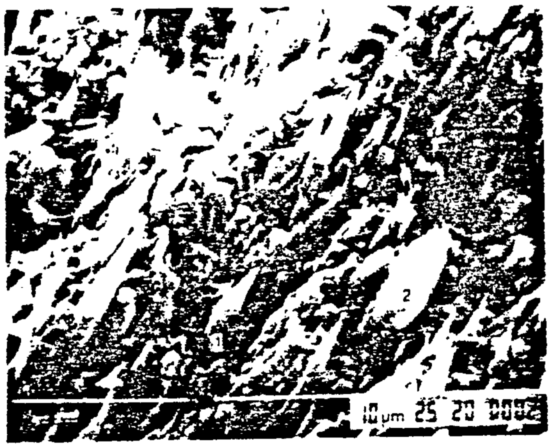

FIG. 1

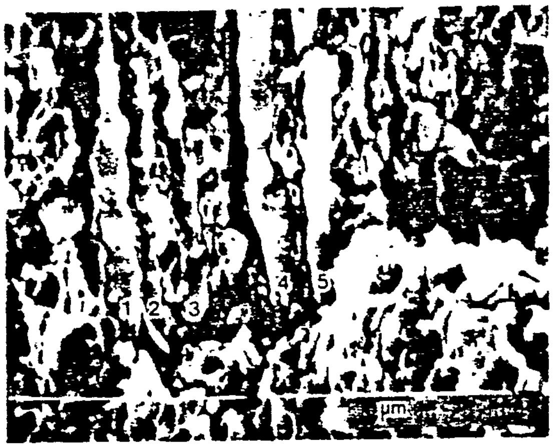

FIG. 2

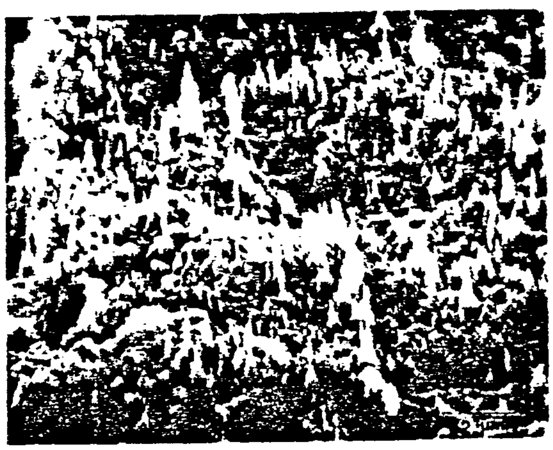

FIG. 3

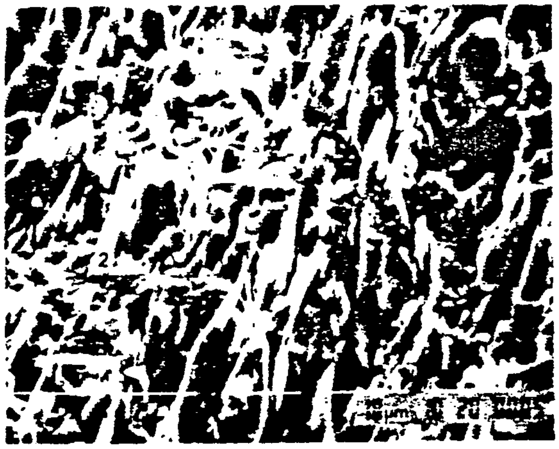

FIG. 4

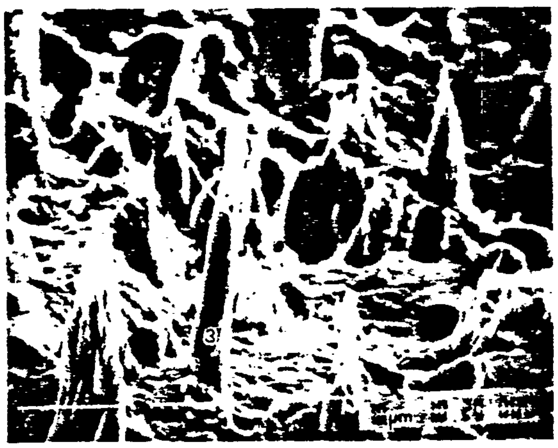

FIG. 5